# FASCICULE DE BREVET EUROPEEN

(11) **EP 2 866 106 B1**
(45) Date de publication et mention de la délivrance du brevet: **30.11.2016**
(21) Numéro de dépôt: 14187709.2
(22) Date de dépôt: 06.10.2014
(51) Int. Cl.: G05B 19/042

(54) **Appareil de duplication de paramètres d'utilisation inscrits dans la mémoire non volatile d'un outil industriel**
Gerät zum Reproduzieren der Anwendungsparameter, die in einem nicht-flüchtigen Speicher eines Industriewerkzeugs gespeichert sind
Apparatus for duplicating usage parameters written in the non-volatile memory of an industrial tool

(30) Priorité: 10.10.2013 FR 1359848
(43) Date de publication de la demande: 29.04.2015
(73) Titulaire: Etablissements Georges Renault, 44800 Saint Herblain (FR)
(72) Inventeur: Pineau, Laurent, 44100 Nantes (FR); Garin, Joël, 44800 Saint-Herblain (FR); Macquet, Laurent, 44240 La Chapelle Sur Erdre (FR)
(74) Mandataire: Vidon Brevets & Stratégie

(56) Documents cités:
- US-A1- 2013 138 785

## Description

### 1. Domaine de l'invention

L'invention concerne le domaine de la duplication de paramètres d'utilisation d'outils. Plus précisément, l'invention concerne un appareil capable de dupliquer des paramètres d'utilisation lisibles dans des mémoires non volatiles communiquant par radio et intégrés dans des outils industriels.

### 2. Art antérieur

Le contexte de l'invention est celui de l'utilisation d'outil, tel qu'un outil de vissage dans le cadre de la production industrielle et en particulier dans celui de l'industrie automobile. L'industrie automobile utilise des systèmes de vissage permettant un traçage de la qualité de toutes les opérations de production. Ceci a amené le développement de systèmes de vissage capable d'assurer des cycles de vissage intégrant de multiples étapes faisant varier des paramètres de vissage tels que:
- la vitesse de rotation (différente si phase de pré-vissage ou de vissage).
- la stratégie de serrage: détermination du couple, angle, limite élastique suivant l'application.

Ces systèmes de vissage peuvent aussi être programmés pour fournir un compte rendu de vissage global pour un groupe de plusieurs serrages et pour réaliser un enchaînement de différents vissages avec différentes stratégies de serrage. Ces systèmes de vissage permettent aussi d'exporter sur les réseaux informatiques des unités de production les résultats de serrage, couple, angle, intensité moteur, etc.

Les visseuses portables étaient jusqu'à une récente époque reliées par un câble à un contrôleur fournissant à l'outil la puissance électrique nécessaire et assurant une communication pour le transfert des paramètres permettant d'une part le pilotage de l'outil en terme de stratégie de vissage et l'exportation des résultats vers les réseaux informatiques.

Pour des raisons ergonomiques et d'accessibilité les visseuses à batterie tendent à se développer de plus en plus, le contrôleur conserve les rôles suivants:
- exportation des résultats de vissage,
- autorisation de la visseuse à fonctionner,
- interface permettant la programmation de cycle de vissage et leur transfert dans la mémoire de la visseuse.

Le document US 2013//138785 déposé par VANCE JONATHAN décrit un procédé de lecture et d'écriture de données d'utilisation enregistrées dans une mémoire associée à un outil. Un serveur central programme les données dans la mémoire, et si l'outil associé tombe en panne, il est nécessaire d'en reprogrammer un autre.

De nos jours, une visseuse à batterie intègre une mémoire non volatile contenant des données relatives à la configuration de la visseuse : recette de vissage, données d'appairage avec le contrôleur etc.). Le chargement de ces données peut suivant le modèle de la visseuse être fait depuis l'IHM de la visseuse, de l'IHM du contrôleur ou en liaison sans fil depuis un ordinateur.

Ceci est une opération demandant une ou plusieurs dizaines de minutes et présentant un risque d'erreur important.

### 3. Inconvénient de l'art antérieur

Lorsqu'une visseuse devient défectueuse sur une ligne d'assemblage, elle doit être remplacée par un nouvel outil en un temps le plus court possible, compte tenu du coût d'arrêt de la chaine de production.

Dans ces circonstances, le temps de configuration de la nouvelle visseuse et le risque de rentrer des données erronées n'est pas acceptable...

### 4. Objectifs de l'invention

L'invention a notamment pour objectif de pallier les inconvénients de l'art antérieur. Un objectif de la présente invention consiste à effectuer un transfert de données d'un outil vers un autre de façon rapide et fiable, et apte à être réalisé en milieu industriel.

La présente invention permet notamment un remplacement rapide et une programmation facile d'un nouvel outil de vissage remplaçant un outil défectueux.

### 5. Exposé de l'invention

Ces objectifs, ainsi que d'autres qui apparaîtront par la suite, sont atteints grâce à l'invention qui a pour objet un appareil de duplication de données lisibles d'une mémoire intégrée à un outil portatif, la mémoire étant accessible en lecture et écriture par une liaison sans fil avec l'appareil lorsque l'outil se trouve dans son environnement. Une partie au moins des données de la mémoire définit des paramètres d'utilisation de cet outil portatif. L'appareil comporte notamment : un moyen d'identification d'outils portatifs dont un premier outil contient dans sa mémoire des paramètres d'utilisation à dupliquer dans la mémoire d'un second outil, un moyen de lecture dans la mémoire du premier outil portatif de ses paramètres d'utilisation, et un moyen d'écriture dans la mémoire d'un second outil portatif des paramètres d'utilisation lus dans la mémoire du premier outil.

De cette manière, il est possible d'effectuer en milieu industriel un transfert de données d'un outil vers une autre de façon rapide et fiable. Ainsi, un outil hors service peut être facilement et rapidement remplacé par un autre en ordre de marche.

Selon un premier mode de réalisation, l'appareil de duplication comporte un moyen d'affichage des identifiants d'au moins deux outils, et un moyen de commande de sélection par un utilisateur pour sélectionner le premier et le second outil dans la liste affichée. De cette manière, l'utilisateur peut facilement choisir les deux outils sur l'appareil de duplication.

Selon un autre mode de réalisation, une donnée lue dans la mémoire des deux au moins outils portatifs identifie l'origine de l'état non opérationnel de l'outil, le moyen d'affichage affichant une information représentative de cet état non opérationnel. De cette manière, l'utilisateur détermine rapidement les seconds outils susceptibles de remplacer un premier outil.

Selon un autre mode de réalisation, le moyen d'écriture est apte à écrire en parallèle dans au moins deux mémoires d'au moins deux seconds outils portatifs. De cette manière, il est possible de dupliquer plusieurs seconds outils à la fois pour équiper un poste de travail.

Selon un autre mode de réalisation, l'appareil de duplication comporte une mémoire contenant un tableau indexé par les identifiants des outils et enregistrant des statistiques d'utilisation de chaque outil, dont le nombre de duplications. De cette manière, l'utilisateur peut gérer un parc d'outils et connaître leurs utilisations respectives.

Selon un autre mode de réalisation, les paramètres d'utilisation lus dans la mémoire du premier outil et dupliqués dans la mémoire du second outil comportent un au moins des paramètres de la liste suivante: paramètre du moyen de communication radio permettant une communication bidirectionnelle entre l'outil et son contrôleur, données d'utilisation. De cette manière, les outils sont plus facilement dupliqués.

Selon un autre mode de réalisation, les données d'utilisation constituent les commandes successives appliquées à la motorisation pour effectuer un cycle de fonctionnement. De cette manière, le second outil effectue à l'identique les opérations du premier outil.

Selon un autre mode de réalisation, l'appareil de duplication comporte un écran affichant des informations représentatives de l'une au moins des étapes suivantes :
- lecture des données du premier outil en cours,
- état du contact radio entre l'appareil de duplication (10) et chaque outil (1),
- détection d'un défaut de lecture des données du premier outil,
- détection d'un outil pour duplication,
- écriture des données dans le second outil,
- détection d'un défaut d'écriture des données dans la mémoire du second outil.

De cette manière, l'utilisateur est mieux informé de l'état des outils.

Selon un autre mode de réalisation, l'appareil de duplication comporte un moyen de comparaison des paramètres d'utilisation lus de la mémoire du premier outil avec des spécifications techniques du second outil, la duplication est interdite si les spécifications techniques du second outil ne permettent pas de reproduire les paramètres d'utilisation lus dans la mémoire du premier outil. De cette manière, l'appareil vérifie si le second outil peut remplir l'opération que doit effectuer le premier outil.

Selon un autre mode de réalisation, le moyen de comparaison vérifie qu'une des conditions suivantes est respectées pour autoriser la duplication :
- les références du modèle du premier et du second outils sont identiques,
- les modèles du premier et du second sont déclarés équivalents,
- le modèle du second outil est compatible avec son utilisation sur le poste de travail du premier outil.

De cette manière, l'appareil prévoit différentes situations où des seconds outils peuvent remplacer un premier outil.

Selon un autre mode de réalisation, l'appareil de duplication comporte un moyen d'affichage présentant la liste d'outils présents dans l'environnement avec une distinction visuelle aux identifiants des outils dont les spécifications techniques permettent de reproduire les paramètres d'utilisation lus dans la mémoire du premier outil. De cette manière, l'appareil de duplication apporte une aide à la sélection d'un second outil.

Selon un autre mode de réalisation, l'appareil de duplication comporte un moyen d'affichage affichant au moins une donnée contenue dans la liste des données suivantes :
- taux de travail d'un outil,
- couple maximal développé par un outil,
- température maximale mesurée au sein d'un outil,
- nombre de pannes détectées ayant occasionnées des duplications d'un outil.

Selon un autre mode de réalisation, la liaison sans fil permettant de communiquer entre l'appareil et la mémoire est du type radio à courte portée (NFC). De cette manière, la communication entre les outils et l'appareil de duplication est facilitée et seuls des outils dans l'environnement proche de l'appareil sont concernés.

### 6. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- la figure 1 montre un exemple d'outil industriel possédant une mémoire non volatile dialoguant sans contact,
- la figure 2 présente un exemple de synoptique d'appareil apte à réaliser une duplication de données contenues dans des mémoires,
- la figure 3 présente un exemple d'ordinogramme des étapes pour la mise en oeuvre d'une duplication de données contenues dans des mémoires,
- la figure 4 présente un exemple d'apparence d'écran pour le contrôle de la duplication de données contenues dans des mémoires d'outils industriel,
- la figure 5 présente un exemple d'apparence d'écran pour la maintenance des outils d'une unité de production.

### 7. Description d'un mode de réalisation de l'invention

### 7.1 Principe général

La présente invention concerne un appareil de duplication de données lisibles d'une mémoire intégrée à un outil portatif, la mémoire étant accessible en lecture et écriture par une liaison sans fil avec l'appareil lorsque l'outil se trouve dans son environnement et sans qu'il soit nécessaire que la mémoire intégrée à l'outil soit alimentée par une autre source d'énergie que celle fournie par l'appareil de duplication. Une partie au moins des données de la mémoire définit des paramètres d'utilisation de cet outil portatif. L'appareil comporte notamment : un moyen d'identification d'au moins deux outils, un premier outil disposant d'une mémoire dont les paramètres d'utilisation sont à dupliquer dans la mémoire d'un second outil, un moyen de lecture dans la mémoire d'un premier outil portatif des paramètres d'utilisation de cet outil portatif, et un moyen d'écriture dans la mémoire d'un second outil portatif des paramètres d'utilisation lus dans la mémoire du premier outil.

### 7.2 Description des dispositifs préférés mis en oeuvre

Les visseuses électriques à serrage asservi sont classiquement mises en oeuvre pour assurer, au cours d'une opération de vissage, le serrage d'un assemblage, c'est à dire la liaison de plusieurs pièces par exemple au moyen d'une vis serrée à un couple dont la valeur est choisie de façon que l'assemblage soit suffisamment rigide. Des valeurs associées à chaque étape de vissage assurent un cycle de fonctionnement correct.

De façon générale, les paramètres d'utilisation peuvent être définis par des:
- paramètres du moyen de communication radio autorisant une liaison bidirectionnelle entre l'outil et son contrôleur,
- données d'utilisation (appelée dans l'industrie « recette de vissage » ou « stratégie de vissage », c'est à dire, les commandes successives appliquées à la motorisation pour effectuer un cycle de fonctionnement).

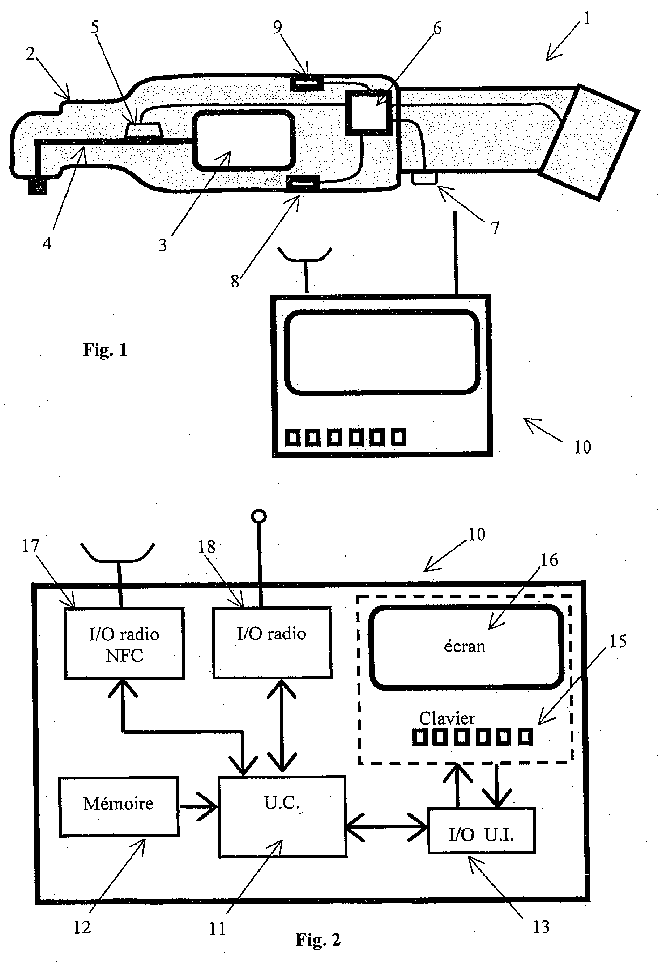

En référence à la **FIG. 1**, un outil 1 tel qu'une visseuse électrique asservie comprend généralement un carter 2 comprenant une poignée et contenant notamment les éléments suivants :
- un moteur 3 muni d'un rotor animant un organe terminal susceptible de porter un embout de vissage et muni d'un capteur thermique et d'un capteur d'angle,
- une transmission 4 incluant une réduction de type épicycloïdale couplée aux moyens moteurs et à l'organe terminal,
- un capteur 5 de couple destiné à détecter l'atteinte d'un couple objectif Cobj, la transmission comprenant une couronne liée en rotation au carter de la visseuse par l'intermédiaire de ce capteur de couple,
- un moyen de contrôle 6 commandant en continu le moteur et recevant des capteurs des informations sur l'opération en cours,
- un moyen de commande de l'outil 7, typiquement une gâchette électrique,
- une mémoire non volatile 8 connectée au moyen de contrôle et apte à communiquer avec un autre appareil à l'aide d'une liaison sans contact,
- préférentiellement, un moyen de communication radio 9 (utilisant un réseau local de type Wifi par exemple) pour recevoir les paramètres d'utilisation venant d'un contrôleur, ou un moyen de connexion filaire,
- préférentiellement, une batterie, ou en variante un câble d'alimentation.

Selon l'invention, la mémoire non volatile 8 communique par liaison filaire au moins en lecture avec le moyen de contrôle 6. La mémoire non volatile 8 communiquant par radio à très courte portée est avantageusement du type RF_ID (acronyme de « Radio Frequency Identification » ou radio-identification en français) » ou NFC (acronyme de « Near Field Communication» ou communication à très courte portée). Le moyen d'émission/réception d'onde radio à courte portée équipant la mémoire 8 est activé par un champ électrique contrôlé par l'appareil de duplication et permet à la fois de transmettre des données pour écriture et de lire les données enregistrées en mémoire. Le champ électrique permet d'alimenter la mémoire et son moyen d'émission/réception afin que la communication reste possible même si la batterie de l'outil est à plat et de façon générale, même si l'outil est hors service. En effet, l'antenne d'une puce RF_ID suffit à fournir l'énergie pour alimenter la mémoire afin d'effectuer à distance ce type d'opération. Pour cela, la visseuse est approchée d'un appareil détectant en permanence la présence de tels outils.

Dans la suite du document, l'expression « premier outil » désignera un outil industriel dont on désire dupliquer les caractéristiques; et l'expression « second outil » désignera un outil industriel qui reçoit ses caractéristiques et peut remplacer le « premier outil » dans son utilisation sur le poste de travail.

Selon un exemple particulier de réalisation de l'invention, la mémoire non volatile comporte au moins deux sections. Une première section de la mémoire est non réinscriptible par l'appareil de duplication à l'aide de la liaison radio à faible portée, c'est à dire que l'appareil ne peut écrire et modifier les données contenues dans cette première section mais l'appareil peut les lire. Cette première section contient notamment les informations suivantes:
- la référence du modèle de l'outil,
- un identifiant de cet outil,
- des informations relatives à une éventuelle panne de l'outil.
- des informations relatives au taux de travail de l'outil,

L'autre section est réinscriptible par l'appareil de duplication dans un second outil:
La section réinscriptible par l'appareil de duplication dans le second outil contient notamment :
   - paramètres du moyen de communication radio 9 autorisant une liaison bidirectionnelle entre l'outil et son contrôleur,
   - données d'utilisation (appelée également « recette de vissage »).

Selon un mode préféré de réalisation, les données d'utilisation sont transmises par le contrôleur de l'outil et reçues par le moyen de communication radio 9. Dans ce cas, ces données d'utilisation n'ont pas besoin d'être mémorisées dans la section réinscriptible de la mémoire. Lors de la duplication d'outils, il suffit de contrôler si le second outil possède des spécifications techniques équivalentes au premier outil.

Selon un perfectionnement, la section non réinscriptible par l'appareil de duplication à l'aide de la liaison radio contient également un indicateur sur son état opérationnel ou non, et/ou un compteur de cycles de fonctionnement, et/ou des informations représentatives du taux de travail de l'outil. Ces informations sont mises à jour par le moyen de contrôle 6 à l'aide de la liaison filaire et sont destinées à enrichir un tableau de maintenance géré par l'appareil de duplication.

Selon l'invention, la mémoire non volatile 8 communique par radio avec un appareil de duplication 10.

La **FIG. 2** présente un appareil de duplication 10 selon un exemple de réalisation. Cet appareil 10 dispose d'une unité centrale U.C. 11 connectée à une mémoire 12 contenant un programme d'exploitation et un module logiciel de duplication de mémoire, un module de gestion de l'interface utilisateur 13 pour gérer un moyen d'introduction de commande 15 (clavier, écran tactile, souris, ...) et un moyen d'affichage 16 (écran, afficheur, voyant lumineux), un module 17 de lecture/écriture dans une mémoire dialoguant sans contact, et éventuellement un module de communication bidirectionnelle 18 avec un réseau local. Selon un perfectionnement, l'appareil de duplication 10 dispose également d'un émetteur de signaux sonores tel qu'un haut-parleur ou buzzer. L'appareil de duplication est par exemple une tablette ou un ordinateur portable.

### 7.3 Description des étapes pour la mise en oeuvre de l'invention

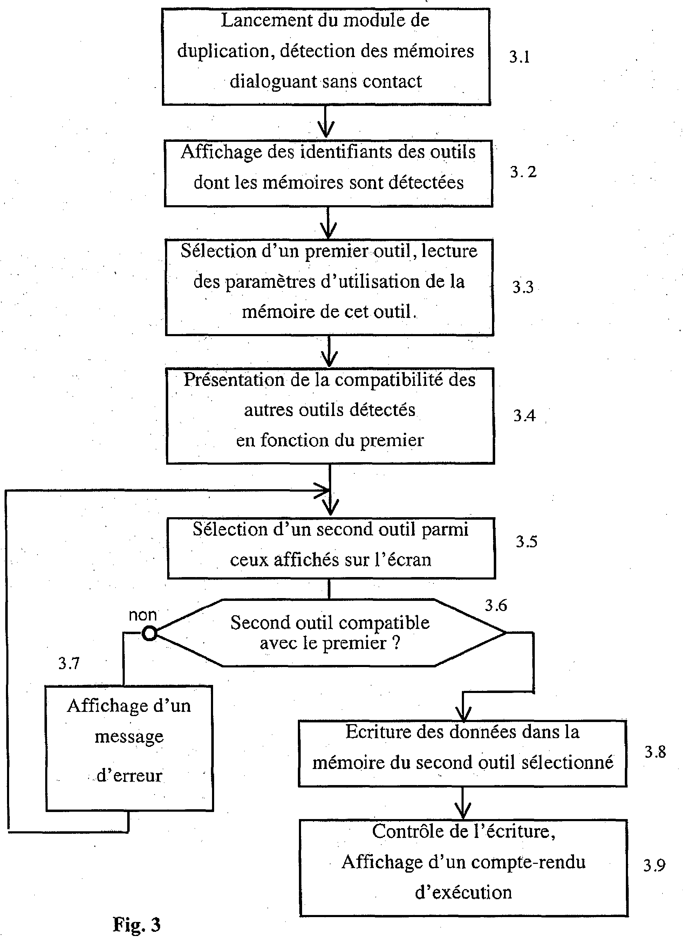

Après avoir détaillé les éléments principaux de l'invention, nous allons maintenant expliquer comment ceux-ci coopèrent. La **FIG. 3** présente un ordinogramme des principales étapes permettant la duplication de paramètres d'utilisation inscrits dans des mémoires implémentées dans des outils industriels.

A l'étape 3.1, un utilisateur se trouve sur un poste de travail utilisant au moins un outil portatif et lance l'exécution du module logiciel de duplication de mémoire. Le lancement du module s'effectue en introduisant une commande sur le clavier 15, ou en utilisant une souris et en cliquant sur une icône présente dans un menu, en encore en appuyant sur une icône affichée sur l'écran dans le cas où ce dernier est tactile.

Le module logiciel de duplication détecte en permanence la présence de mémoires non volatiles dialoguant sans contact et lit leurs contenus. Le module met constamment à jour un menu affiché sur l'écran 16 et présentant les identifiants des différents outils dont les mémoires non volatiles associés sont détectées au fil du temps (étape 3.2). Selon un perfectionnement, l'appareil de duplication 10 émet un signal sonore lors de l'apparition ou la disparition de tout outil. De cette manière, l'utilisateur peut être informé d'un changement et n'a pas besoin de consulter constamment l'écran pour s'assurer qu'un outil est bien détecté. Le fait de l'approcher de l'appareil 10 et d'entendre le signal suffit.

A l'étape 3.3, l'utilisateur sélectionne un premier outil parmi la liste des outils affichés. Si cela n'a pas été fait auparavant, le module de duplication lit alors les paramètres d'utilisation de l'outil sélectionné. Selon un perfectionnement de la présente invention, le module de duplication peut déterminer la compatibilité des autres outils dits « second outils » par rapport à celui sélectionné et fournit une indication sur la possibilité pour chacun de ces second outils de remplacer sur le poste de travail le premier outil sélectionné (étape 3.4). Puis, à l'étape 3.5, l'utilisateur sélectionne un second outil destiné à recevoir les mêmes paramètres d'utilisation que ceux enregistrés dans la mémoire non volatile du premier. Le module vérifie alors si le second outil est compatible avec le premier (étape 3.6). Si ce n'est pas le cas, à l'étape 3.7, un message d'erreur est affiché informant de la non-compatibilité et que la duplication des paramètres d'utilisation lus dans le premier outil n'est pas autorisée. Si par contre les outils sont compatibles, alors à l'étape 3.8, les paramètres d'utilisation précédemment lus de la mémoire non volatile du premier outil sont écrits celle du second outil. A la fin de la duplication, le module effectue une lecture de la mémoire non volatile du second outil et contrôle la bonne écriture des données (étape 3.9). Un compte-rendu est alors affiché informant l'utilisateur du déroulement de la duplication. Si la duplication s'est correctement déroulée, l'utilisateur peut utiliser le second outil en remplacement du premier.

Des messages informant du bon où mauvais déroulement de la duplication sont affichables sur l'écran 16. Ces messages informent notamment des états suivants:
- lecture des données du premier outil en cours,
- état du contact radio entre l'appareil de duplication et chaque outil,
- détection d'un défaut de lecture des données du premier, outil,
- détection d'un outil pour duplication,
- écriture des données dans le second outil,
- détection d'un défaut d'écriture des données dans la mémoire du second outil.

Le test de compatibilité permet de vérifier que les caractéristiques du second outil sélectionné par l'utilisateur permettent de reproduire les paramètres d'utilisation lus dans la mémoire du premier outil. Pour cela, l'appareil de duplication 10 compare les paramètres d'utilisation du premier outil avec les spécifications techniques des autres seconds outils présents dans l'environnement de l'appareil.

La compatibilité entre un premier outil et un second outil est possible si l'une des situations suivantes intervient:
- les références du modèle des deux outils sont identiques,
- les modèles des deux outils sont déclarés équivalents,
- le modèle de l'outil considéré est compatible avec son utilisation sur le poste de travail du premier outil.

La compatibilité entre deux modèles d'outils est par exemple possible si les plages de couple, de vitesse de rotation et de précision d'un second outil couvrent les besoins de l'application de vissage à laquelle est attribuée le premier outil.

Selon une variante de réalisation, l'appareil de duplication a accès à une base de données référençant les outils disponibles dans l'unité de production et identifiés par leurs références lisibles dans la mémoire non volatile associée. Cette base de données peut être gérée par un serveur centralisé avec lequel un ou plusieurs appareils de duplication communiquent. Cette base de données référence notamment les opérations à réaliser dans l'unité de production et la liste des modèles d'outils autorisés à fonctionner pour ces opérations. Selon un perfectionnement, l'appareil de duplication fournit une indication de la compatibilité d'un outil déterminé en fonction des paramètres d'utilisation liés à un poste de travail. La base de données peut également être utilisée à des fins de maintenance des outils d'une unité de production.

### 7.4 Description des menus affichés et d'autres modes de réalisation

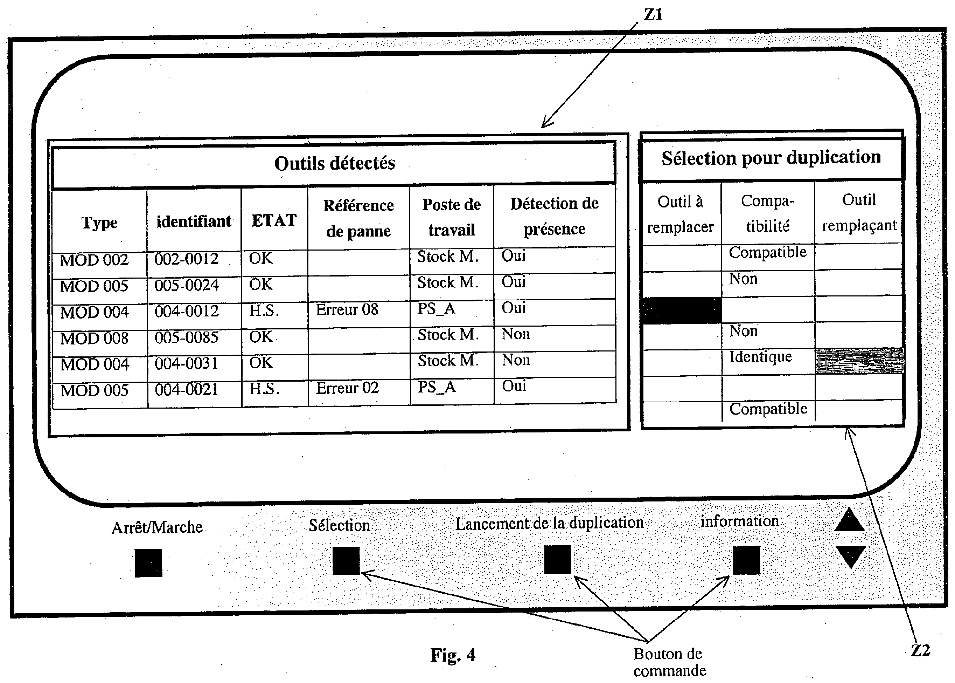

La **FIG.4** présente un exemple d'apparence d'écran pour le contrôle de la duplication de données contenues dans des mémoires d'outils industriel. Le menu présenté apparaît lorsque l'utilisateur a sélectionné le premier et le second outil à la suite aux étapes 3.3 et 3.5.

Dans l'exemple présenté, le menu comporte principalement deux zones, la première Z1 présente les outils dont la mémoire non volatile est ou a été détectée, et l'autre zone Z2 permet à l'utilisateur de choisir les outils à dupliquer. Selon cet exemple, les boutons permettant à l'utilisateur d'introduire une commande ne sont pas intégrés à l'écran. Si l'écran est tactile, alors les boutons de commande apparaissent dans une troisième zone de l'écran.

Lors du lancement du module de duplication, l'appareil de duplication 10 affiche la zone Z1 à gauche de l'écran qui présente les informations associées à tous les outils détectés, ces informations provenant de la mémoire dialoguant sans contact, et éventuellement d'informations de maintenance contenues dans une base de données accessible par l'appareil 10. Dans l'exemple préféré décrit par la **FIG.4**, la zone Z1 comporte six colonnes. La première et la seconde colonnes affichent les données d'identification de chaque outil détecté : un numéro de série et une valeur de référence de modèle d'outil. La troisième colonne affiche l'état de fonctionnement de l'outil, cet état est codifié par une valeur lisible dans la mémoire non volatile intégrée à cet outil. Cette donnée est mise à jour par l'outil portatif lorsque celui-ci détecte une panne et que cette panne n'affecte pas la possibilité d'écrire dans la mémoire non volatile 8. La panne, détectée par les capteurs 5, peut être par exemple une surchauffe, ou un couple détecté dépassant les spécifications, ou une intensité électrique sur le moteur non compatible avec le couple mesuré. Le code représentatif de l'état de fonctionnement de l'outil et décrivant le type de panne le cas échéant, est lu dans la mémoire non volatile 8 de l'outil et est affiché dans la quatrième colonne. Dans l'exemple, les outils identifiés 004-0012 et 005-0021 sont hors service. C'est parmi ces outils que l'utilisateur va sélectionner celui à remplacer. La cinquième colonne permet d'informer du poste auquel l'outil détecté est généralement affecté. L'outil détecté peut éventuellement appartenir à un stock de maintenance (référencé Stock M. sur la **FIG.4**). La sixième colonne permet d'informer en temps réel l'utilisateur de la présence ou non de chaque outil dans l'environnement de l'appareil de duplication 10.

Dans un premier temps, la zone Z2 apparaît sans aucune information. Une fois que l'utilisateur a sélectionné un outil à dupliquer dans la première colonne de Z2, en l'occurrence le troisième outil référencé 004-0012, le module de duplication met à jour la seconde colonne de la zone Z2 en indiquant par rapport à l'outil sélectionné, quels sont les autres outils qui lui sont compatibles, voire identiques. L'outil sélectionné est du modèle 004 et est compatible avec le modèle 002 mais pas le modèle 005. Le premier et le septième outil sont déclarés «compatible», le cinquième étant déclaré « identique » car étant du même modèle. Le second et le quatrième outil, de modèle 005 est déclaré « non compatible ». Le sixième outil n'est pas proposé pour recevoir les paramètres d'utilisation à dupliquer car il est hors service.

Dans un second temps, l'utilisateur sélectionne un second outil dont la mémoire non volatile associée va recevoir les paramètres d'utilisation du premier outil. La sélection s'effectue en activant la case du tableau correspondant à cet outil dans la colonne de droite de la zone Z2. L'opérateur peut alors lancer la duplication en appuyant sur un bouton de commande.

Selon un perfectionnement (non obligatoire dans le cadre de la présente invention), le menu de la FIG.4 permettant la duplication en parallèle dans plusieurs mémoires non volatiles de façon à produire en même temps plusieurs outils ayant les mêmes paramètres d'utilisation. Cette possibilité permet lors de la mise en marche d'un poste de travail sur lequel plusieurs opérateurs sont présents, de les équiper rapidement avec les bons outils. Cette possibilité est offerte en sélectionnant plusieurs seconds outils dans la première colonne de la zone Z2.

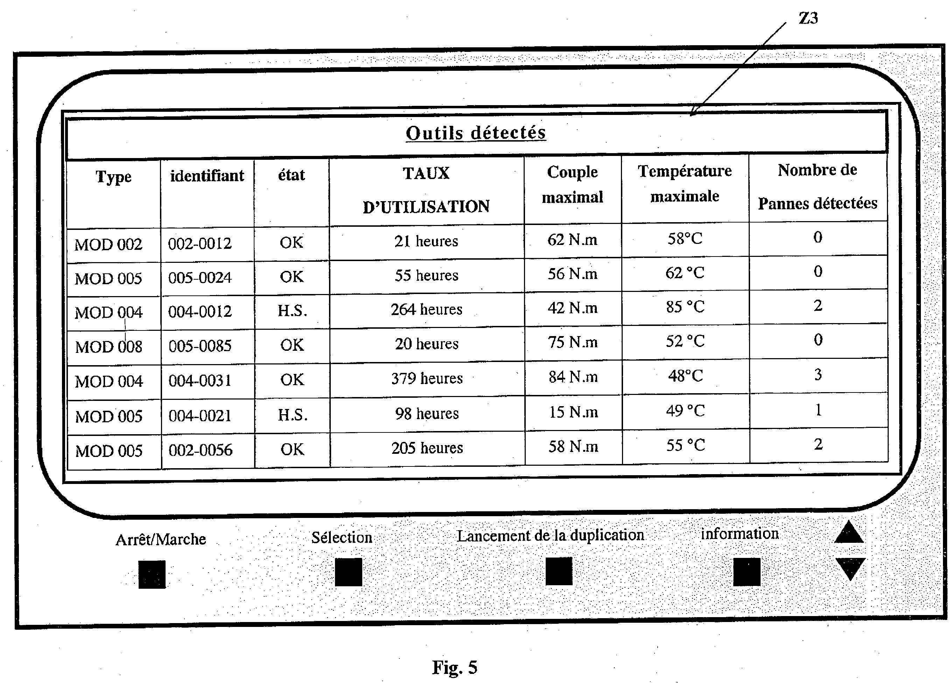

Selon un autre perfectionnement (non obligatoire dans le cadre de la présente invention), l'appareil de duplication 10 possède une fonction de gestion de maintenance des outils en disposant d'une base de données embarquée ou au moins accessible à partir d'un serveur. Les informations de maintenance accessibles par un bouton de commande de l'appareil 10 sont visibles par un autre menu Z3 dont un exemple est donné à la **FIG.5****.** Les données affichées sont enregistrées dans un fichier de gestion permettant par exemple de dresser des statistiques de fonctionnement et de panne des différents outils de l'unité de production. Les informations de maintenance utiles à l'utilisateur et affichables par l'appareil 10 sont par exemple :
- taux de travail de l'outil,
- couple maximal développé par l'outil,
- température maximale mesurée au sein de l'outil,
- nombre de pannes détectées ayant occasionnées des duplications de l'outil.

Le taux de travail de l'outil est une information représentative de l'usure de l'outil, par exemple le nombre d'heures d'utilisation. Certaines des informations affichées peuvent être directement extraites de la mémoire non volatile de chaque outil détecté dans l'environnement de l'appareil 10.

En analysant les informations affichées, l'utilisateur peut déterminer que certains outils atteignent un seuil dans leur utilisation et qu'il est nécessaire de les remplacer par d'autres outils.

L'invention n'est pas limitée aux modes de réalisation qui viennent d'être décrits.

## Revendications

1. Appareil de duplication (10) de données lisibles d'une mémoire (8) intégrée à un outil portatif (1), ladite mémoire étant accessible en lecture et écriture par une liaison sans fil avec l'appareil lorsque l'outil se trouve dans son environnement, une partie des données de la mémoire définissant des paramètres d'utilisation de cet outil portatif; ledit appareil est **caractérisé en ce qu'**il comporte en outre :
- un moyen d'identification d'au moins deux outils, un premier outil disposant d'une mémoire dont les paramètres d'utilisation sont. à dupliquer dans la mémoire d'un second outil,
- un moyen de lecture (17) dans la mémoire d'un premier outil portatif d'au moins les paramètres d'utilisation de cet outil portatif,
- un moyen d'écriture (17) dans la mémoire d'un second outil portatif des paramètres d'utilisation lus dans la mémoire du premier outil.

2. Appareil de duplication selon la revendication 1, **caractérisé en ce qu'**il comporte un moyen d'affichage (16) des identifiants d'au moins deux outils (1), et un moyen de commande de sélection (15) par un utilisateur pour sélectionner le premier et le second outil dans la liste affichée.

3. Appareil de duplication selon la revendication 2, **caractérisé en ce qu'**une donnée lue dans la mémoire (8) des deux au moins outils portatifs identifie l'origine de l'état non opérationnel de l'outil, le moyen d'affichage (16) affichant une information représentative de cet état non opérationnel.

4. Appareil de duplication selon la revendication 2 ou 3, **caractérisé en ce que** le moyen d'écriture (17) est apte à écrire en parallèle dans au moins deux mémoires d'au moins deux seconds outils portatifs.

5. Appareil de duplication selon l'une quelconque des revendications précédentes **caractérisé en ce qu'**il comporte une mémoire contenant un tableau indexé par les identifiants des outils et enregistrant des statistiques d'utilisation de chaque outil, dont le nombre de duplications.

6. Appareil de duplication selon l'une quelconque des revendications précédentes **caractérisé en ce que** les paramètres d'utilisation lus dans la mémoire du premier outil et dupliqués dans la mémoire du second outil comportent un au moins des paramètres de la liste suivante :
- paramètres du moyen de communication radio (9) permettant une communication bidirectionnelle entre l'outil et son contrôleur,
- données d'utilisation.

7. Appareil de duplication selon la revendication 6, **caractérisé en ce que** les données d'utilisation constituent les commandes successives appliquées à la motorisation pour effectuer un cycle de fonctionnement.

8. Appareil de duplication selon l'une quelconque des revendications précédentes **caractérisé en ce qu'**il comporte un moyen d'affichage (16) affichant des informations représentatives de l'une au moins des étapes suivantes :
- lecture des données du premier outil en cours,
- état du contact radio entre l'appareil de duplication (10) et chaque outil (1),
- détection d'un défaut de lecture des données du premier outil,
- détection d'un outil pour duplication,
- écriture des données dans le second outil,
- détection d'un défaut d'écriture des données dans la mémoire du second outil.

9. Appareil de duplication selon l'une quelconque des revendications précédentes, **caractérisé en ce qu'**il comporte un moyen de comparaison des paramètres d'utilisation lus de la mémoire du premier outil avec des spécifications techniques du second outil, la duplication est interdite si les spécifications techniques du second outil ne permettent pas de reproduire les paramètres d'utilisation lus dans la mémoire du premier outil.

10. Appareil de duplication selon la revendication 9, **caractérisé en ce que** le moyen de comparaison vérifie qu'une des conditions suivantes est respectées pour autoriser la duplication :
- les références du modèle du premier et du second outils sont identiques,
- les modèles du premier et du second sont déclarés équivalents,
- le modèle du second outil est compatible avec son utilisation sur le poste de travail du premier outil.

11. Appareil de duplication selon l'une quelconque des revendications 1 à 9, **caractérisé en ce qu'**il comporte un moyen d'affichage présentant la liste d'outils présents dans l'environnement avec une distinction visuelle aux identifiants des outils dont les spécifications techniques permettent de reproduire les paramètres d'utilisation lus dans la mémoire du premier outil.

12. Appareil de duplication selon l'une quelconque des revendications précédentes, **caractérisé en ce qu'**il comporte un moyen d'affichage affichant au moins une donnée contenue dans la liste des données :
- taux de travail d'un outil,
- couple maximal développé par un outil,
- température maximale mesurée au sein d'un outil,
- nombre de pannes détectées ayant occasionnées des duplications d'un outil.

13. Appareil de duplication selon l'une quelconque des revendications précédentes, **caractérisé en ce que** la liaison sans fil permettant de communiquer entre l'appareil et la mémoire est du type radio à courte portée (NFC).

## Patentansprüche

1. Vorrichtung zum Duplizieren (10) von Daten, die aus einem in einem tragbaren Werkzeug (1) integrierten Speicher (8) lesbar sind, wobei der Speicher zum Lesen und zum Schreiben über eine drahtlose Verbindung mit der Vorrichtung zugreifbar ist, wenn sich das Werkzeug in ihrer Umgebung befindet, wobei ein Teil der Daten des Speichers Parameter der Nutzung des tragbaren Werkzeugs definiert; wobei die Vorrichtung **dadurch gekennzeichnet ist, dass** sie weiter aufweist:
- ein Mittel zum Identifizieren wenigstens zweier Werkzeuge, wobei ein erstes Werkzeug einen Speicher aufweist, in dem sich die Parameter der Nutzung zum Duplizieren in den Speicher eines zweiten Werkzeugs befinden,
- ein Mittel zum Lesen (17), aus dem Speicher eines ersten tragbaren Werkzeugs, wenigstens der Parameter der Nutzung dieses tragbaren Werkzeugs,
- ein Mittel zum Schreiben (17), in den Speicher eines zweiten tragbaren Werkzeugs, der aus dem Speicher des ersten tragbaren Werkzeugs gelesenen Parameter der Nutzung.

2. Vorrichtung zum Duplizieren nach Anspruch 1, **dadurch gekennzeichnet, dass** sie ein Mittel zum Anzeigen (16) von Kennungen wenigstens zweier Werkzeuge (1) und ein Mittel zur Steuerung der Auswahl (15) durch einen Bediener zum Auswählen des ersten und des zweiten Werkzeugs in der angezeigten Liste aufweist.

3. Vorrichtung zum Duplizieren nach Anspruch 2, **dadurch gekennzeichnet, dass** ein aus dem Speicher (8) der wenigstens zwei tragbaren Werkzeuge gelesenes Datum die Ursache des nicht betriebsbereiten Zustands des Werkzeugs identifiziert, wobei das Mittel zur Anzeige (16) eine Information anzeigt, die für diesen nicht betriebsbereiten Zustand repräsentativ ist.

4. Vorrichtung zum Duplizieren nach Anspruch 2 oder 3, **dadurch gekennzeichnet, dass** das Mittel zum Schreiben (17) geeignet ist, parallel in wenigstens zwei Speicher wenigstens zweier zweiter tragbarer Werkzeuge zu schreiben.

5. Vorrichtung zum Duplizieren nach einem der vorstehenden Ansprüche, **dadurch gekennzeichnet, dass** sie einen Speicher aufweist, der eine Tabelle enthält, die durch die Kennungen der Werkzeuge indexiert ist und Nutzungsstatistiken jedes Werkzeugs aufzeichnet, darunter die Anzahl der Duplizierungen.

6. Vorrichtung zum Duplizieren nach einem der vorstehenden Ansprüche, **dadurch gekennzeichnet, dass** die Parameter der Nutzung, die aus dem Speicher des ersten Werkzeugs gelesen sind und in den Speicher des zweiten Werkzeugs dupliziert sind, wenigstens Parameter aus der folgenden Liste aufweisen:
- Parameter des Mittels zur Funkkommunikation (9), die eine bidirektionale Kommunikation zwischen dem Werkzeug und seiner Steuerung erlauben,
- Nutzungsdaten.

7. Vorrichtung zum Duplizieren nach Anspruch 6, **dadurch gekennzeichnet, dass** die Nutzungsdaten die sukzessiv auf den Antrieb zum Ausführen eines Betriebszyklus angewandten Befehle bilden.

8. Vorrichtung zum Duplizieren nach einem der vorstehenden Ansprüche, **dadurch gekennzeichnet, dass** sie ein Mittel zur Anzeige (16) aufweist, das Informationen anzeigt, die für wenigstens einen der folgenden Schritte repräsentativ sind:
- Lesen der Daten des ersten Werkzeugs im Gange,
- Zustand des Funkkontaktes zwischen der Vorrichtung zum Duplizieren (10) und jedem Werkzeug (1),
- Erfassen eines Lesefehlers der Daten des ersten Werkzeugs,
- Erfassen eines Werkzeugs zum Duplizieren,
- Schreiben der Daten in das zweite Werkzeug,
- Erfassen eines Schreibfehlers der Daten in dem Speicher des zweiten Werkzeugs.

9. Vorrichtung zum Duplizieren nach einem der vorstehenden Ansprüche, **dadurch gekennzeichnet, dass** sie ein Mittel zum Vergleichen der Parameter der Nutzung, die aus dem Speicher des ersten Werkzeugs gelesen wurden, mit den technischen Spezifikationen des zweiten Werkzeugs aufweist, wobei das Duplizieren verboten ist, wenn die technischen Spezifikationen des zweiten Werkzeugs das Reproduzieren der Parameter der Nutzung, die aus dem Speicher des ersten Werkzeugs gelesen wurden, nicht zulassen.

10. Vorrichtung zum Duplizieren nach Anspruch 9, **dadurch gekennzeichnet, dass** das Mittel zum Vergleichen überprüft, dass die folgenden Bedingungen zum Autorisieren des Duplizierens eingehalten werden:
- die Referenzierungen der Modelle des ersten und des zweiten Werkzeugs sind identisch,
- die Modelle des ersten und des zweiten sind als gleichwertig deklariert,
- das Modell des zweiten Werkzeugs ist damit kompatibel, dass es auf dem Arbeitsplatz des ersten Werkzeugs eingesetzt wird.

11. Vorrichtung zum Duplizieren nach einem der Ansprüche 1 bis 9, **dadurch gekennzeichnet, dass** sie ein Mittel zum Anzeigen aufweist, das die Liste der in der Umgebung vorhandenen Werkzeuge mit einer visuellen Unterscheidung der Kennungen der Werkzeuge präsentiert, dessen technische Spezifikationen das Reproduzieren der Parameter der Nutzung, die aus dem Speicher des ersten Werkzeugs gelesen wurden, zulassen.

12. Vorrichtung zum Duplizieren nach einem der vorstehenden Ansprüche, **dadurch gekennzeichnet, dass** sie ein Mittel zum Anzeigen aufweist, das wenigstens ein Datum anzeigt, das in der folgenden Liste von Daten enthalten ist:
- Arbeitsrate eines Werkzeugs,
- von einem Werkzeug maximal zur Verfügung gestelltes Drehmoment,
- in Umgebung eines Werkzeugs maximale gemessene Temperatur,
- Anzahl der erfassten Ausfälle, die Duplizierungen eines Werkzeugs verursacht haben.

13. Vorrichtung zum Duplizieren nach einem der vorstehenden Ansprüche, **dadurch gekennzeichnet, dass** die drahtlose Verbindung, welche ein Kommunizieren zwischen der Vorrichtung und dem Speicher ermöglicht, in der Art einer Nahfeldkommunikation (NFC) ist.

## Claims

1. Apparatus (10) for duplicating data that can be read from a memory (8) integrated into a portable tool (1), the said memory being accessible for reading and writing by a wireless link to the apparatus when the tool is in its vicinity, some of the data of the memory defining utilisation parameters of this portable tool; the said apparatus is **characterised in that** it furthermore comprises:
- means for identifying at least two tools, a first tool having a memory whose utilisation parameters are to be duplicated in the memory of a second tool,
- means (17) for reading from the memory of a first portable tool at least the utilisation parameters of this portable tool,
- means for (17) writing in the memory of a second portable tool the utilisation parameters read from the memory of the first tool.

2. Duplicating apparatus according to Claim 1, **characterised in that** it comprises a means (16) for displaying identifiers of at least two tools (1), and a control means (15) for selection by a user in order to select the second tool from the list displayed.

3. Duplicating apparatus according to Claim 2, **characterised in that** an information read from the memory (8) of the at least two portable tools identifies the origin of the non-operational state of the tool, the display means (16) displaying information representing this non-operational state.

4. Duplicating apparatus according to Claim 2 or 3, **characterised in that** the writing means (17) is able to write in parallel in at least two memories of at least two second portable tools.

5. Duplicating apparatus according to any one of the preceding claims, **characterised in that** it comprises a memory containing a table indexed by the identifiers of the tools and recording utilisation statistics of each tool, including the number of duplications.

6. Duplicating apparatus according to any one of the preceding claims, **characterised in that** the utilisation parameters read from the memory of the first tool and duplicated in the memory of the second tool comprise at least one of the parameters in the following list:
- parameters of the radio communication means (9) allowing bidirectional communication between the tool and its controller,
- utilisation data.

7. Duplicating apparatus according to Claim 6, **characterised in that** the utilisation data constitute the successive commands applied to the motor in order to carry out an operating cycle.

8. Duplicating apparatus according to any one of the preceding claims, **characterised in that** it comprises a display means (16) displaying information representing at least one of the following steps:
- reading of the data of the current first tool,
- state of the radio contact between the duplicating apparatus (10) and each tool (1),
- detection of a fault during reading of the data of the first tool,
- detection of a tool for duplication,
- writing of the data in the second tool,
- detection of a fault during writing of the data in the memory of the second tool.

9. Duplicating apparatus according to any one of the preceding claims, **characterised in that** it comprises means for comparing the utilisation parameters read from the memory of the first tool with the technical specifications of the second tool, the duplication being prevented if the technical specifications of the second tool do not allow reproduction of the utilisation parameters read from the memory of the first tool.

10. Duplicating apparatus according to Claim 9, **characterised in that** the comparison means checks that one of the following conditions is satisfied in order to allow the duplication:
- the references of the model of the first and second tools are identical,
- the models of the first and the second tool are equivalent,
- the model of the second tool is compatible with its use on the workstation of the first tool.

11. Duplicating apparatus according to any one of Claims 1 to 9, **characterised in that** it comprises a display means presenting the list of tools present in the vicinity with visual highlighting for the identifiers of the tools whose technical specifications allow reproduction of the utilisation parameters read from the memory of the first tool.

12. Duplicating apparatus according to any one of the preceding claims, **characterised in that** it comprises display means displaying at least one information contained in the list of data:
- working rate of a tool,
- maximum torque developed by a tool,
- maximum temperature measured within a tool,
- number of detected malfunctions that have given rise to duplications of a tool.

13. Duplicating apparatus according to any one of the preceding claims, **characterised in that** the wireless link allowing communication between the apparatus and the memory is of the short-range radio type (NFC).
